# EUROPEAN PATENT SPECIFICATION

(11) **EP 3 536 932 B1**
(45) Date of publication and mention of the grant of the patent: **21.07.2021**
(21) Application number: 19161399.1
(22) Date of filing: 07.03.2019
(51) Int. Cl.: F02C 7/052, B64D 33/02

(54) **AIR INTAKE UNIT FOR AN ENGINE OF AN AIRCRAFT**
LUFTEINLASSEINHEIT FÜR EINEN MOTOR EINES FLUGZEUGES
UNITÉ D'ADMISSION D'AIR POUR UN MOTEUR D'AÉRONEF

(30) Priority: 07.03.2018 IT 201800003353
(43) Date of publication of application: 11.09.2019
(73) Proprietor: BMC S.R.L., 40059 Medicina (IT)
(72) Inventor: BERGAMI, Gaetano, 40059 MEDICINA (BO) (IT)
(74) Representative: Maccagnan, Matteo

(56) References cited:
- IT-A1- UB20 154 090
- US-A- 3 449 891
- US-A- 3 483 676
- US-A1- 2013 092 798

## Description

### CROSS-REFERENCE TO RELATED APPLICATIONS

This patent application claims priority from Italian patent application no. 102018000003353 filed on 07/03/2018.

### TECHNICAL FIELD

The invention relates to an air intake unit for an engine of an aircraft, namely a machine built by mankind, which can stand and move in the air enabling the transportation of people or objects in the Earth's atmosphere.

The invention finds advantageous application in a helicopter, to which explicit reference will be made in the description below without because of this loosing in generality.

### PRIOR ART

A modern helicopter generally is provided with at least one turbine engine, which operates a complex of blades, which allow the helicopter to lift and lower itself in a vertical direction, stand still while flying, move to the side, forward and backward. The turbine engine has, at the front, an air intake, through which the turbine engine sucks in the external air needed to operate (namely, the external air containing the oxygen needed for the combustion).

Generally speaking, the air intake can comprise a metal grid with relatively large meshes (in the range of one or two centimetres), which fulfils the function of preventing birds from flying into the air intake. More rarely, between the air intake and the turbine engine there is arranged an air filter having the function of filtering the air taken in, so as to hold back small-sized impurities (dust or the like), which, in the long term, can cause an early wear of the turbine engine. The use of the air filter is generally avoided, as the air filter causes load losses, which have a significant negative impact on the performances of the turbine engine, and has proven to be useful only close the ground; as a matter of fact, impurities tend to move downwards due to gravity and, therefore, they can be present in the air only in proximity to the ground, whereas at certain heights (i.e. beyond 50-70 metres from the ground) the air is completely free from impurities. As a consequence, the air filter is mounted only when the helicopter must operate (especially take off or land) in areas with a lot of dust, for example in desert areas.

However, the absence of the filter has proven to generally determine higher maintenance costs for the engine, due to the greater wear provoked by the presence of foreign bodies in the combustion chamber during take-off and landing (namely when the helicopter is close to the ground) . As a matter of fact, even when the helicopter takes off and lands in heliports (with asphalt surfaces or the like), air currents generated by the rotation of the blades inevitably lift and spread around impurities (basically dust and small debris), which are always present in the external environment.

Patent application US2013092798A1 describes an air filter for helicopters with a cylindrical shape and provided, at the front, with a front portion, which is ogive-shaped and is axially movable between a closed position (in which it prevents air from flowing through a bypass air intake with an annular shape) and an open position (in which is allows air to flow through the bypass air intake). In other words, when the front portion is arranged in the open position, air can flow through the bypass air intake in a completely radial direction, thus avoiding flowing through the filtering material; however, the air flow rate entering the bypass air intake is relative modest, as the air is deflected far from the bypass air intake by the ogive-shaped front portion.

Patent US3483676A1 describes another air filter for helicopters with the shape of a truncated cone and provided, at the front, with a bypass air intake regulated by a movable door controlled by a motor-driven actuator; when the door is opened, air can flow through the bypass air intake, thus avoiding flowing through the filtering material.

Italian patent IT102015000057836 (patent application ITUB20154090A1) discloses an air intake unit for an engine of a helicopter; the intake unit comprises: a tubular housing provided with an outer wall and having an ogive-shaped front portion and a rear portion; a first inlet opening, which is obtained in the rear portion through the outer wall of the tubular housing and through which the external air needed to operate the engine can be taken in; an air filter with a tubular shape, which is supported by the tubular housing and engages the first inlet opening, so as to filter the external air flowing through the first inlet opening; a plurality of second inlet openings, each of which is obtained in the ogive-shaped front portion through a limited portion of the outer wall of the tubular housing, is separate from and independent of the first inlet opening and the air filter, and through which the external air needed to operate the engine can be taken in; a shutter device, which is coupled to the second inlet openings and comprises a plurality of bulkheads, each of which is mounted so as to move between a closed position, in which the bulkhead closes the second inlet opening, joining - without gaps - the outer wall of the ogive-shaped front portion in the area of the second inlet opening, and an open position, in which the bulkhead sets the passage through the second inlet opening free, moving away from the outer wall of the ogive-shaped front portion; and an actuator, which moves the bulkhead between the closed position and the open position.

### DESCRIPTION OF THE INVENTION

The object of the invention is to provide an air intake unit for an aircraft engine, which allows the aircraft to safely operate even in areas with a lot of dust, without causing, at the same time, a reduction of the performances.

According to the invention, there is provided an air intake unit for an engine aircraft according to the appended claims.

The appended claims describe preferred embodiments of the invention and form an integral part of the description.

### BRIEF DESCRIPTION OF THE DRAWINGS

The invention will now be described with reference to the accompanying drawings, which show some non-limiting embodiments thereof, wherein:
- figures 1, 2 and 3 are schematic views, namely a side, a front and a top view, respectively, of a helicopter provided with a pair of twin turbine engines provided with corresponding air intake units according to the invention;
- figure 4 is a schematic view of an embodiment not falling within the claimed invention, with a longitudinal section, of an air intake unit of figure 1 with a shutter device in a closed position;
- figure 5 is a schematic view, with a longitudinal section, of the air intake unit of figure 4 with the shutter device in an open position;
- figure 6 is a schematic view, with a longitudinal section, of an alternative embodiment, not falling within the claimed invention, of the air intake unit of figure 4 with the shutter device in a closed position;
- figure 7 is a schematic view, with a longitudinal section, of the air intake unit of figure 6 with the shutter device in an open position;
- figures 8 and 9 are two schematic front views of the air intake unit of figure 6 with the shutter device in a closed position and in an open position, respectively;
- figure 10 is a schematic perspective view of an element of the shutter device of the air intake unit of figure 6;
- figures 11, 12 and 13 are three schematic views, with longitudinal sections, of alternative embodiments, not falling within the claimed invention, of the air intake unit of figure 1; and
- figure 14 is a schematic view, with a longitudinal section, of an embodiment, falling within the claimed invention, of the air intake unit of figure 1 with a shutter device in a closed position; and
- figures 15, 16 and 17 are three schematic views, with longitudinal sections, of the air intake unit of figure
- 14 with the shutter device in an open position and according to three respective variants; the variant of figure 17 does not fall within the scope of the claimed invention.

### DETAILED DESCRIPTION

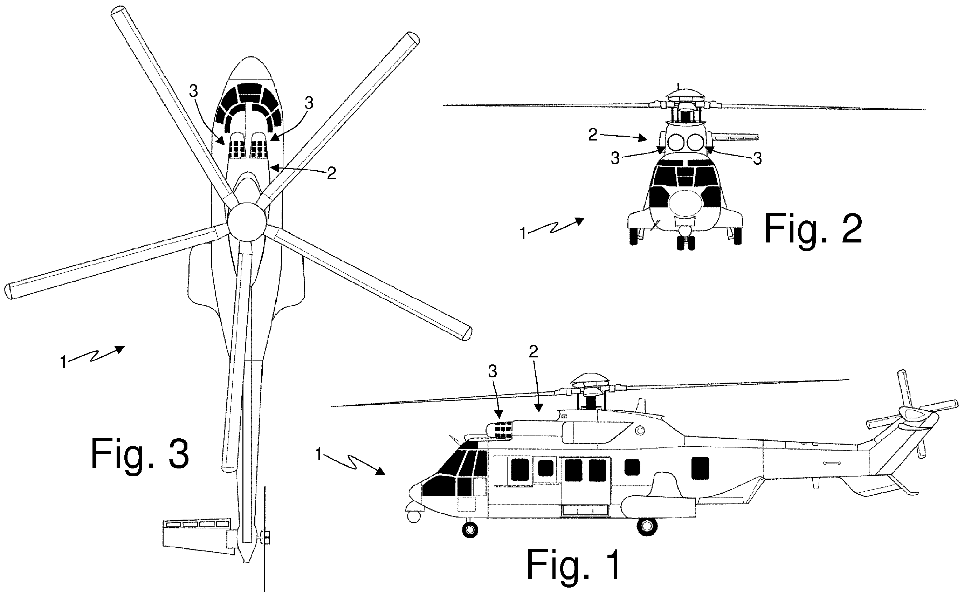

In figures 1, 2 and 3, number 1 indicates, as a whole, a helicopter comprising two twin turbine engines 2, which operate a complex of blades, which allow the helicopter to lift and lower itself in a vertical direction, stand still while flying, move to the side, forward and backward.

Each turbine engine 2 comprises a tubular housing having, at the front, an air intake opening (through which the turbine engine 2 takes in the external air needed to operate, i.e. the external air containing the oxygen needed for the combustion) and, at the back, an air outlet opening (through which the turbine engine 2 expels the exhaust gases produced by the combustion) . In the area of the air inlet opening of each turbine engine 2 there is an air intake unit 3, through which the air taken in by the turbine engine 2 flows.

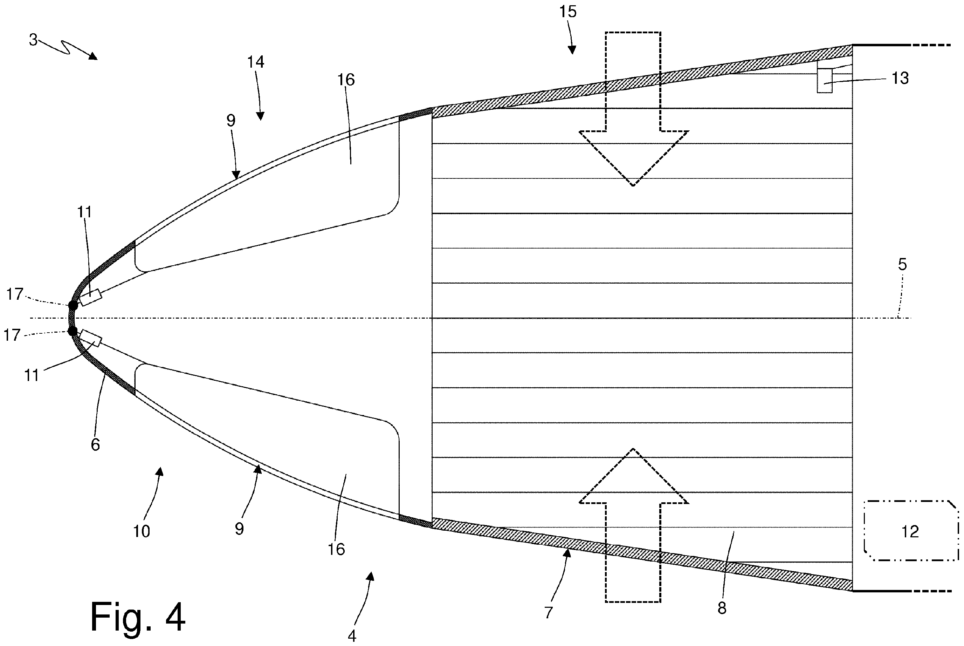

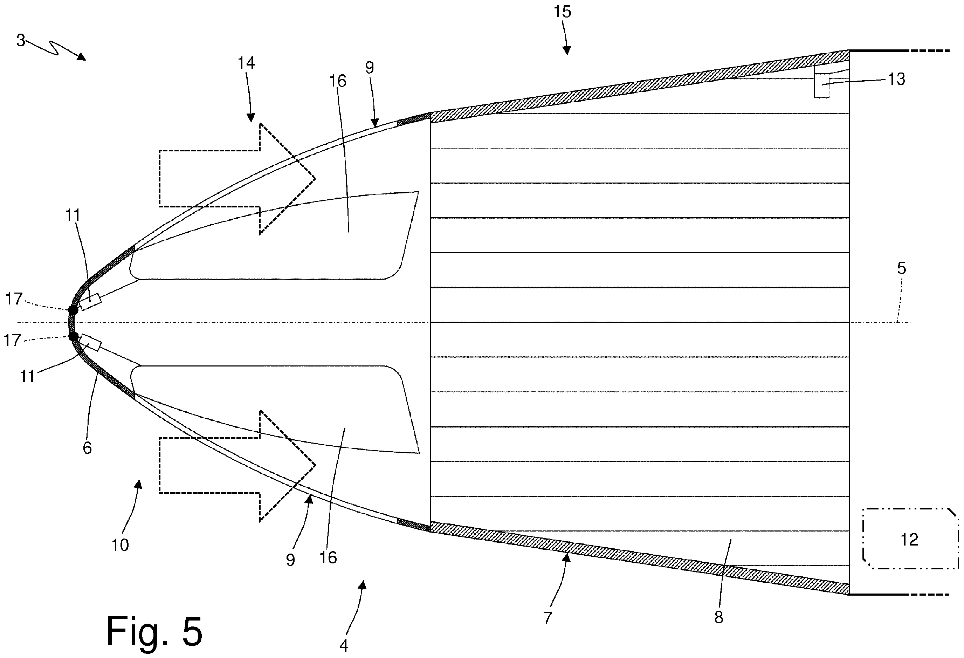

According to figures 4 and 5, the intake unit 3 comprises a tubular housing 4, which has a longitudinal symmetry axis 5 and is provided with an outer wall 6, which delimits the space enclosed by the tubular housing 4.

The air intake unit 3 comprises an inlet opening 7, which is made through the outer wall 6 of the tubular housing 4 and through which the external air needed for the operation the tubular housing 4 and supports different curved panels of filtering material (for example made of fabric or cotton nonwoven fabric or other fibres, enclosed between two layers of a thin metal net, which give shape and resistance to the filtering material).

It should be pointed out that the filtering material of the air filter 8 permits a passage (flow, crossing, inlet) of air both in an axial direction and in a radial direction, which means that air can pass through the filtering material both flowing in an axial direction (i.e. parallel to the longitudinal symmetry axis 5) and flowing in a radial direction (i.e. perpendicularly to the longitudinal symmetry axis 5).

The intake unit 3 comprises a pair of inlet openings 9, each made through the outer wall 6 of the tubular housing 4 (namely, consisting of a through hole made in the outer wall 6 of the tubular housing 4) and completely separate from and independent of the inlet opening 7 and the air filter 8. Through the inlet openings 9 the external air needed for the operation of the turbine engine 2 can be taken in; in other words, the external air needed for the operation of the turbine engine 2 can get into the tubular housing 4 flowing through the inlet openings 9 and, once inside the tubular housing 4, it can reach the turbine engine 2. In the embodiment shown in figure 4, the intake unit 3 comprises two inlet openings 9, but, according to other embodiments which are not shown herein though are perfectly equivalent, the intake unit 3 comprises one single inlet opening 9 or more than two inlet openings 9 arranged beside one another.

As already mentioned above, the air filter 8 has a tubular shape, in which the filtering material is arranged in the area of the side wall, and has - at the front and at the back - respective free openings: the front opening permits the passage of the air coming from the two inlet openings 9, whereas the rear opening allows the air taken in to flow towards the turbine engine 2.

The intake unit 3 comprises a shutter device 10, which is arranged inside the tubular housing 4, is coupled to each inlet opening 9 and is movable between a closed position (shown in figure 4), in which it closes the inlet opening 9 (so as to prevent air from flowing in through the inlet opening 9), and a closed position (shown in figure 5), in which it sets the passage through the inlet opening 9 free (in order to allow air to flow through the inlet opening 9).

Finally, the intake unit 3 comprises an actuator 11 (for example an electric motor or a pneumatic or hydraulic cylinder), which moves the shutter device 10 between the closed position and the open position.

When the shutter device 10 is in the closed position (shown in figure 4), the external air can get into the tubular housing 4 (and, hence, reach the turbine engine 2) only by flowing through the inlet opening 7 and, therefore, passing through the air filter 8. On the other hand, when the shutter device 10 is in the open position (shown in figure 5), the external air can get into the tubular housing 4 (and, hence, reach the turbine engine 2) both by flowing through the inlet opening 7 and, therefore, passing through the air filter 8 and by flowing through the inlet openings 9 and, hence, without flowing through the air filter 8 (as the inlet openings 9 are not provided with filtering material, they do not have any obstacle to the passage of air). Obviously, when the shutter device 10 is in the open position (shown in figure 5), almost all the air getting into the tubular housing 4 in order to reach the turbine engine 2 flows through the inlet openings 9 rather than through the inlet opening 7 engaged by the air filter 8, as flowing through the inlet openings 9 leads to smaller losses of load.

When the shutter device 10 is in the closed position (shown in figure 4), the air taken in necessarily flows through the inlet opening 7 and through the air filter 8; therefore, possible impurities present in the air are held back by the air filter 8, but, on the other hand, the passage through the air filter 8 determines, in the air taken in, a loss of load which jeopardizes the performances of the turbine engine 2. When the shutter device 10 is in the open position (shown in figure 5), instead, the air taken in mainly flows through the inlet openings 9 and possible impurities present in the air are not held back by the air filter 8; hence, there is no loss of load in the air taken in, but, on the other hand, possible impurities present in the air are not held back by the air filter 8.

According to figures 4 and 5, there is provided an electronic control unit 12, which controls the operation of the air intake unit 3 and, among other things, controls the actuator 11 so as to have it move the shutter device 10 between the closed position (shown in figure 4) and the open position (shown in figure 5). In particular, when the helicopter 1 is close to the ground (during take-off or landing or when it stops at a low altitude), the air taken in can (likely) contain impurities and, therefore, the shutter device 10 is moved to and kept in the closed position by the electronic control unit 12, so as to filter the air taken in; on the other hand, when the helicopter 1 flies high (i.e. far from the ground, for example at an altitude of some dozens of metres), the air taken in very unlikely contains impurities and, therefore, the shutter device 10 is moved to and kept in the open position by the electronic control unit 12, so as to avoid (uselessly) jeopardizing the performances of the turbine engine 2.

Furthermore, the electronic control unit 12 is connected to a pressure sensor 13, which is arranged in the tubular housing 4 downstream of the filtering material of the air filter 8 and measures the pressure of the air taken in after it has flown through the air filter 8; when the pressure of the air take in, measured by the pressure sensor 13, is below a threshold value, the shutter device 10 is moved to and kept in the open position (shown in figure 5) by the electronic control unit 12, regardless of the proximity of the helicopter 1 to the ground. In other words, the pressure of the air taken in, measured by the pressure sensor 13, indicates the clogging of the air filter 8, since the more the air filter 8 is clogged, the lower the pressure of the air taken in, measured by the pressure sensor 13, is; therefore, when the air filter 8 is too clogged, namely when the pressure of the air taken in, measured by the pressure sensor 13, is below a threshold value, the shutter device 10 is moved to and kept in the open position (shown in figure 5) by the electronic control unit 12, so as to avoid excessively jeopardizing the performances of the turbine engine 2.

In the embodiment shown in the accompanying figures, the tubular housing 4 has a front portion 14, which is ogive-shaped and through which the inlet openings 9 are obtained, and a rear portion 15, which has the shape of a truncated cone and through which the inlet opening 7 is obtained; therefore, in the embodiment shown in the accompanying figures, the inlet openings 9 are arranged in a front position and, hence, in front of the inlet opening 7, which is arranged in the rear position. According to other embodiments, which are not shown herein, the inlet opening 7 is arranged in a front position and, therefore, in front of the inlet openings 9, which are arranged in a rear position. It should be pointed out that, as the helicopter 1 moves forward, the front position allows openings to intercept, given the same surface, a greater quantity of air and, therefore, the inlet openings 9 arranged in the front position take more advantage of this than the inlet opening 7 arranged in the rear position.

The ogive shape of the front portion 14 indicates a tapered surface, which is designed to offer a minimum fluid-dynamic resistance (namely, an excellent aerodynamic penetration); generally speaking, the ogive shape of the front portion 14 has an axial symmetry and is obtained through the rotation, around the longitudinal axis 5, of a circle arc or of another sundial line tangent to the generatrix of the cylindrical part; it fulfils the aim of providing the projectile itself with a tapered shape. According to a possible embodiment, the ogive shape of the front portion 14 could also not have a perfect symmetry around the longitudinal axis 5, which means that it could be slightly flattened; in other words, the ogive shape of the front portion 14 could also be deformed and, therefore, without the perfect symmetry around the longitudinal axis 5.

To sum up, the tubular housing 4 has, as a whole, a conical shape having the longitudinal symmetry axis 5 parallel to the flying direction of the helicopter 1; the tubular housing 4 with a conical shape comprises the front portion 14, which is ogive-shaped and through which the inlet openings 9 are obtained, and the rear portion 15 with the shape of a truncated cone, through which the inlet opening 7 engaged by the air filter 8 is obtained. The shape of a truncated cone of the air filter 8 increases the filtering surface, given the same outer dimensions, and leads to a projection of the filtering surface normal to the direction of the motion; therefore, said filtering surface can recover pressure from the speed of the helicopter 1 (i.e. it can benefit from the so-called *"RAM"* effect, which increases the static intake pressure exploiting the dynamic pressure generated by the forward movement of the helicopter 1). The ogive shape of the front portion 14 leads to a reduction in the aerodynamic resistance of the air intake unit 3 with the system in filtering configuration; furthermore, the inlet openings 9 made in the ogive-shaped front portion 14 allow pressure to be recovered from the speed of the helicopter 1 (thus taking advantage of the so-called *"RAM"* effect, which increases the static intake pressure exploiting the dynamic pressure generated by the forward movement of the helicopter 1) .

It should be point out that the air filter 8 can recover greater pressure from the speed of the helicopter 1 (i.e. can better benefit from the so-called *"RAM"* effect, which increases the static intake pressure exploiting the dynamic pressure generated by the forward movement of the helicopter 1) thanks to the fact that the filtering material of the air filter 8 permits a passage of air both in an axial direction and in a radial direction.

In the embodiment shown in the accompanying figures, the rear portion 15 of the tubular housing 4 has the shape of a truncated cone; as a consequence, the inlet opening 7 and the air filter 8 engaging the inlet opening 7 have the shape of a truncated cone as well (with the smaller base at the front and the larger base at the back). According to a different embodiment, which is not shown herein, the rear portion 15 of the tubular housing 4 has a cylindrical shape; as a consequence, the inlet opening 7 and the air filter 8 engaging the inlet opening 7 have a cylindrical shape as well.

The shutter device 10 comprises, for each inlet opening 9, a corresponding bulkhead 16, which is movable between the open position (shown in figure 4) and the closed position (shown in figure 5). In particular, each bulkhead 16 is hinged so as to rotate around a rotation axis 17 between the open position and the closed position.

The inlet openings 9 are obtained in the ogive-shaped front portion 14 through a limited portion of the outer wall 6 of the tubular housing 4 (namely, the inlet openings 9 only affect part of the ogive-shaped front portion 14 and consist of through holes made in the outer wall 6 of the tubular housing 4) and, as already mentioned above, they are separate from and independent of the inlet opening 7 and the air filter 8. The shutter device 10, which is coupled to the second inlet openings 9, comprises a plurality of bulkheads 16, each of which is mounted so as to move between a closed position, in which the bulkhead 16 closes the corresponding inlet opening 9, joining - without gaps - the outer wall 6 of the ogive-shaped front portion 14 in the area of the inlet opening 9, and an open position, in which the bulkhead 16 sets the passage through the corresponding inlet opening 9 free, moving away from the outer wall 6 of the ogive-shaped front portion 14. When each bulkhead 16 is in the open position, a main part of the air flowing into the corresponding inlet opening 9 enters in an axial direction relative to the tubular housing 4 (namely, directly enters) without being deflected by the bulkhead 16, whereas a remaining part of the air flowing into the second inlet opening 9 enters in a more or less radial direction relative to the tubular housing 4 since it is deflected (pushed) towards the second inlet opening 9 by the bulkhead 16.

In other words, the actuator 11 moves the bulkheads 16 of the shutter device 10 between the closed position and the open position by means of an outward movement having a radial component relative to the longitudinal symmetry axis 5 of the tubular housing 4; in this way, each bulkhead 16 of the shutter device 10 opens towards to the outside of the tubular housing 4, so that, in the open position, the bulkhead 16 is completely arranged on the outside of the tubular housing 4 and can also deflect (push) part of the air towards the inlet opening 9 of the bulkhead 16.

In embodiment shown in figures 4 and 5, the two bulkheads 16 are separate from one another (i.e. they consist of respective elements having their own moving members) and rotate around respective rotation axes 17, which are parallel to one another and are transverse to the longitudinal symmetry axis 5 of the tubular housing 4. Basically, in the embodiment shown in figures 4 and 5, each bulkhead 16 is a panel reproducing the shape of the corresponding inlet opening 9 or is slightly larger than the inlet opening 9 itself.

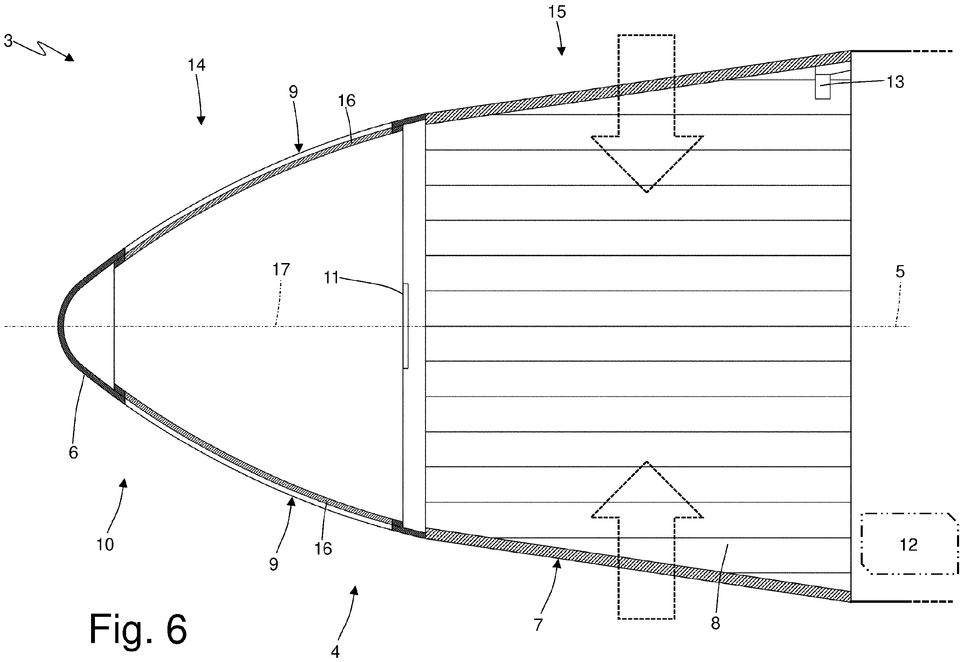

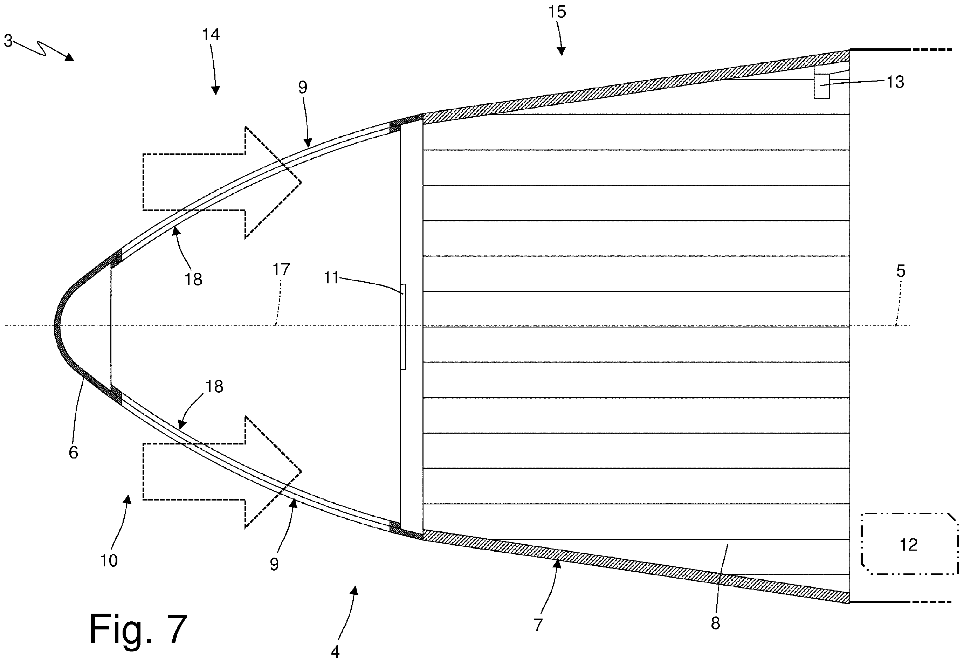

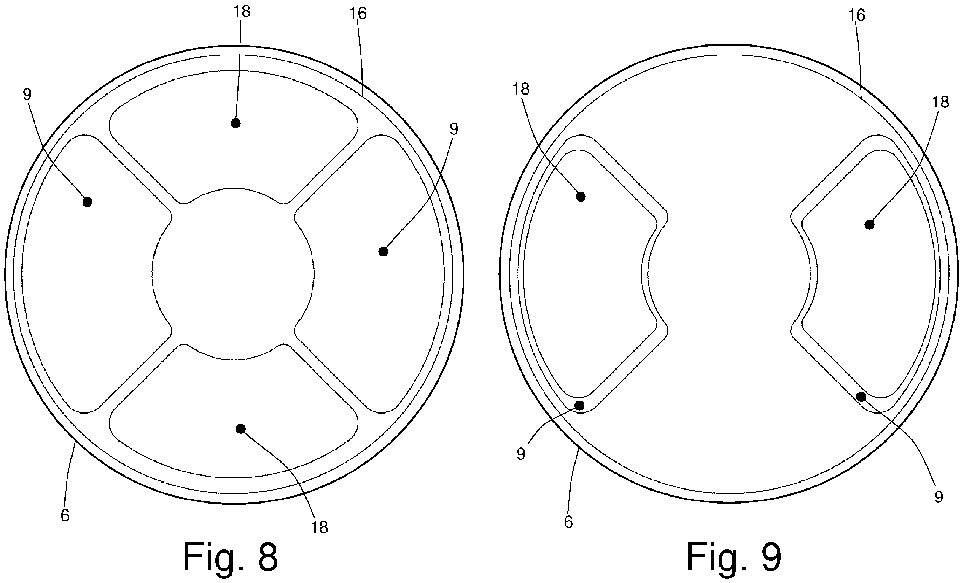

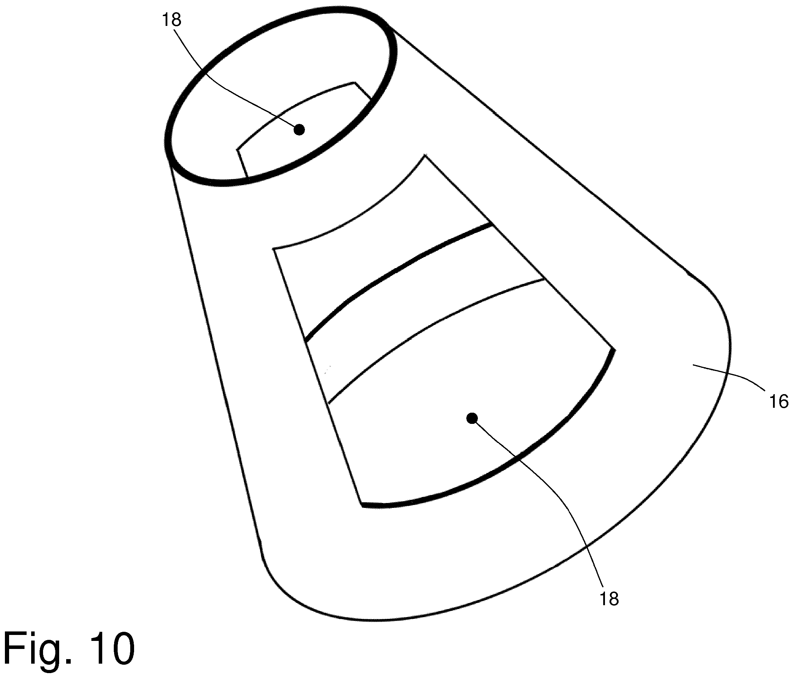

In the embodiment shown in figures 6-10, the two bulkheads 16 form a single tubular body (shown separately in figure 10) with the shape of an ogive (namely, shaped like the front portion 14 of the tubular housing 4), which is arranged inside the front portion 14 of the tubular housing 4 in contact with the outer wall 6 of the tubular body 4. In this embodiment, the rotation axis 17 of the two bulkheads 16 is coaxial to the longitudinal axis 5 of the tubular housing 4. Furthermore, in this embodiment, each bulkhead 16 comprises a through hole 18, which, in the closed position (shown in figures 6 and 8), is far from the corresponding inlet opening 9 and, in the open position (shown in figures 7 and 9), overlaps the corresponding inlet opening 9.

According to a possible embodiment, not part of the claimed invention, in the area of each intake opening 9 there can be arranged a metal grid with relatively large meshes (in the range of one or two centimetres), which fulfils the function of preventing birds from flying into the air intake.

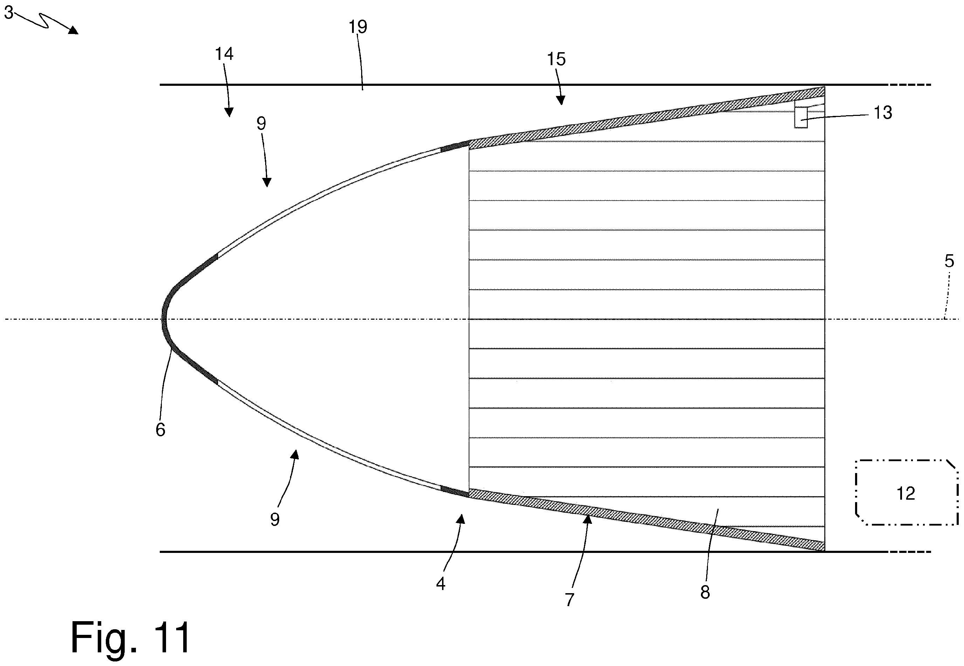

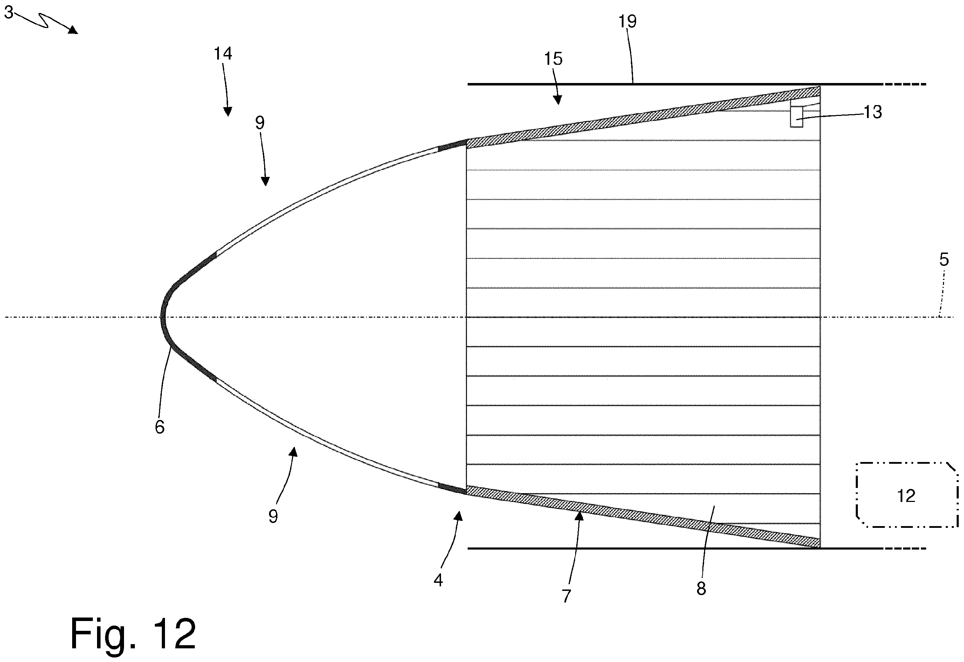

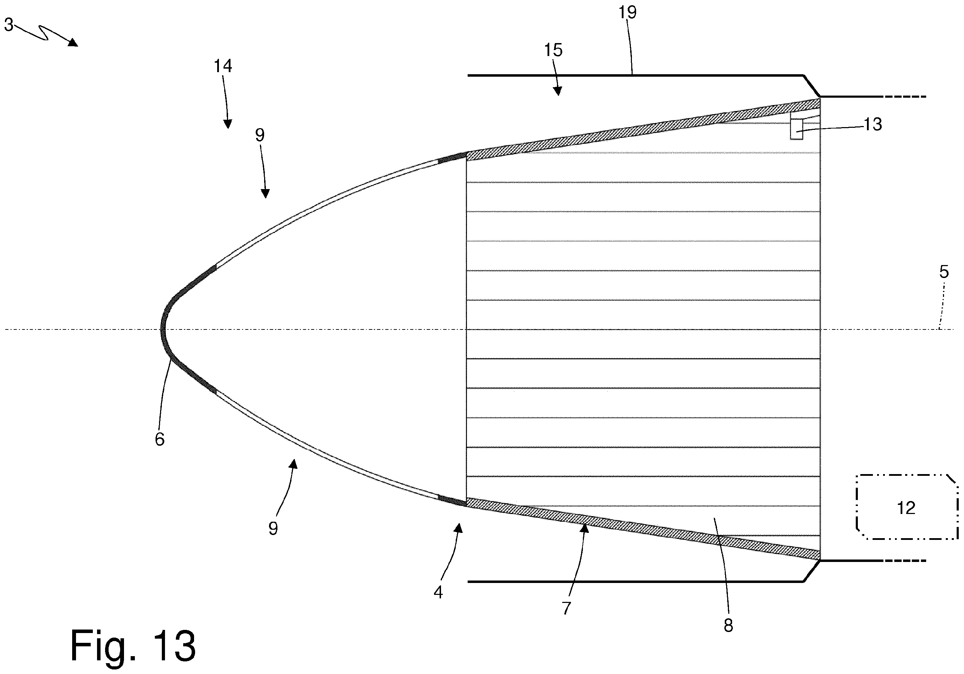

In the alternative embodiments shown in figures 11, 12 and 13, the air intake unit 3 comprises an outer tubular body 19 with a cylindrical shape, which at least partially surrounds the tubular housing 4; in the embodiment shown in figure 11, the outer body 19 completely surrounds the tubular housing 4 (i.e. the entire tubular housing 4 is contained in the outer body 19), whereas, in the embodiment shown in figures 12 and 13, the outer body 19 only partially surrounds the tubular housing 4 (i.e. only part of the tubular housing 4 is contained in the outer body 19). In particular, the outer body 19 contains at least the rear portion 15 of the tubular housing 4, so that the air filter 8 (namely, the inlet opening 7) is contained in the outer body 19. The function of the outer body 19 is that of increasing the dynamic pressure close to the air filter 8, so as to increase the efficiency of the air filter 8 (namely, in order to increase the air flow rate flowing through the air filter 8). The outer body 19 can have an inner diameter equal to the maximum outer diameter of the air filter 8 (as you can see in figures 11 and 12) or it can have an inner diameter greater than the maximum outer diameter of the air filter 8 (as you can see in figure 13). Obviously, the presence of the outer body 19 can be combined both with the conformation of the bulkheads 16 shown in figures 4 and 5 and with the conformation of the bulkheads 16 shown in figures 6-10.

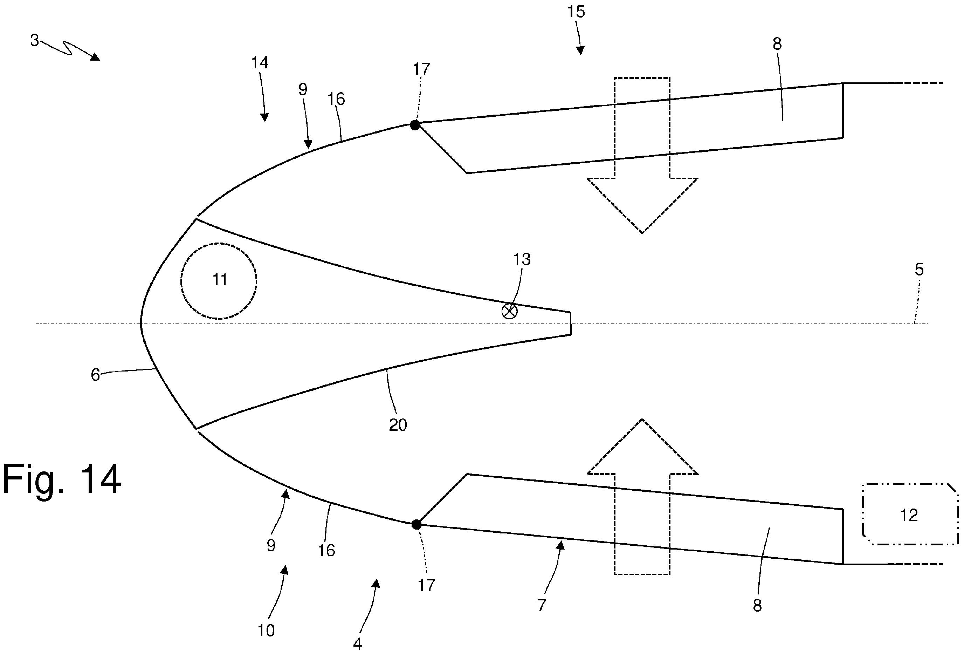

In the embodiments shown in figures 4-13, the bulkheads 16, which engage the inlet openings 9, open towards the inside of the tubular housing 4, which means that in the open position the bulkheads 16 are completely inside the tubular housing 4. In the alternative embodiment shown in figures 14-17, the bulkheads 16, which engage the inlet openings 9, open towards the outside of the tubular housing 4, which means that in the open position the bulkheads 16 are completely outside the tubular housing 4. Opening the bulkheads 16 towards the outside of the tubular housing 4 reduces the obstacles to be overcome by the air getting into the tubular housing 4, as the bulkheads 16 (which are completely on the outside of the tubular housing 4) do not interfere in any way with the air flow inside the tubular housing 4. Furthermore, having the bulkheads 16 open towards the outside of the tubular housing 4 increases the quantity of air getting into the inlet openings 9, as the bulkheads 16 (which are completely on the outside of the tubular housing 4) act like deflectors that direct the air towards the inlet openings 9.

According to a preferred embodiment, on the inside of the tubular housing 4 there is arranged a deflector body 20, which deflects the air entering from the inlet openings 9 towards an intake of the engine 2; in other words, the direction of movement of the air entering from the inlet openings 9 tends to have a significant radial component and the function of the deflector body 20 is that of causing the direction of movement of the air entering from the inlet openings 9 to only have an axial component, thus minimizing the generation of turbulences (which reduce the air flow rate entering from the inlet openings 9). On the inside of the tubular housing 4 there is inserted the conical deflector body 20 (for example having a reverse elliptical shape, as you can see in the accompanying figures), which guides the air flow from the inlet openings 9 to the intake of the engine 2 limiting (reducing to zero) turbulences, especially those turbulences generated by a possible part of *"static"* air (i.e. air located in areas that are not directly affected by the flow).

According to a preferred embodiment, the deflector body 20 (which, in the most generic form, resembles a cone) is also used to contain the actuator 11 that moves the bulkheads 16 of the shutter device 10 between the closed position and the open position. Furthermore, the deflector body 20 can also be used to contain the sensors needed for monitoring the conditions of the air filter 8 (for example the pressure sensor 13 arranged in the tubular housing 4 downstream of the filtering material of the air filter 8 and designed to measure the pressure of the air taken in after it has flown through the air filter 8).

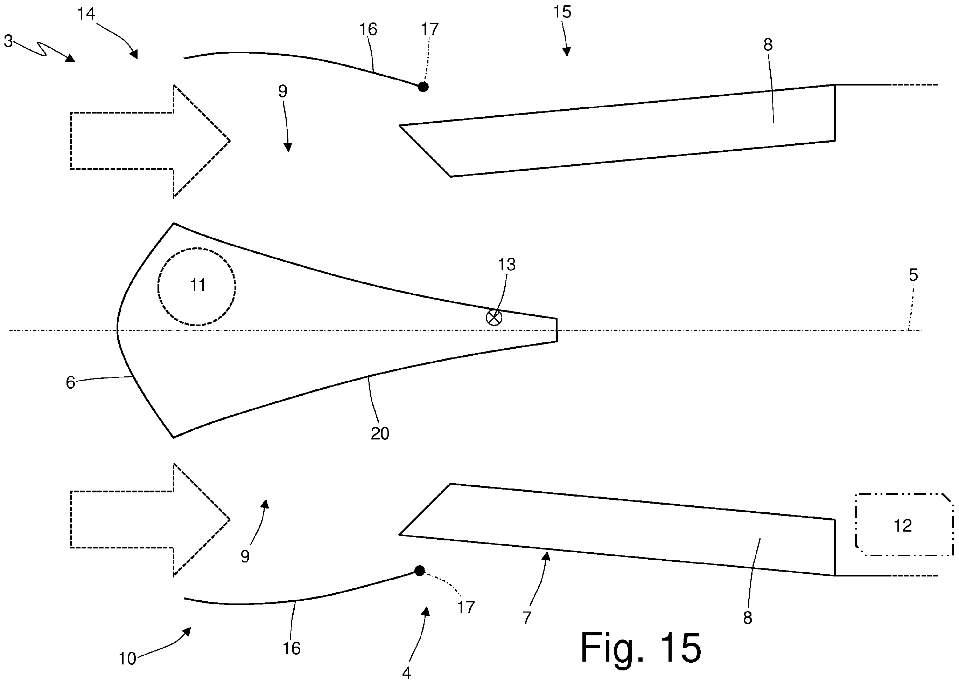

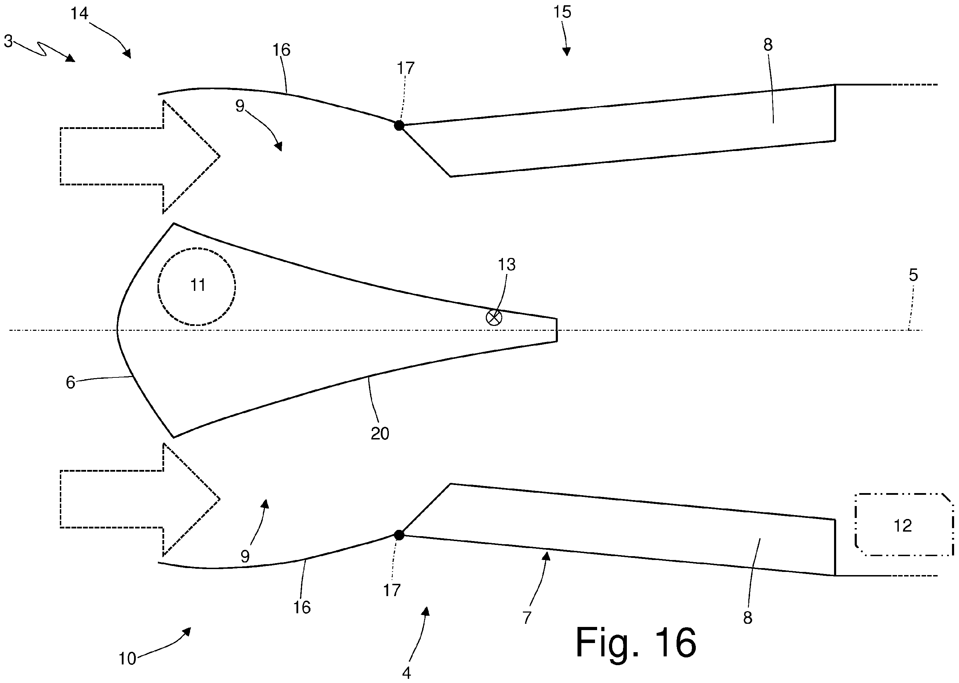

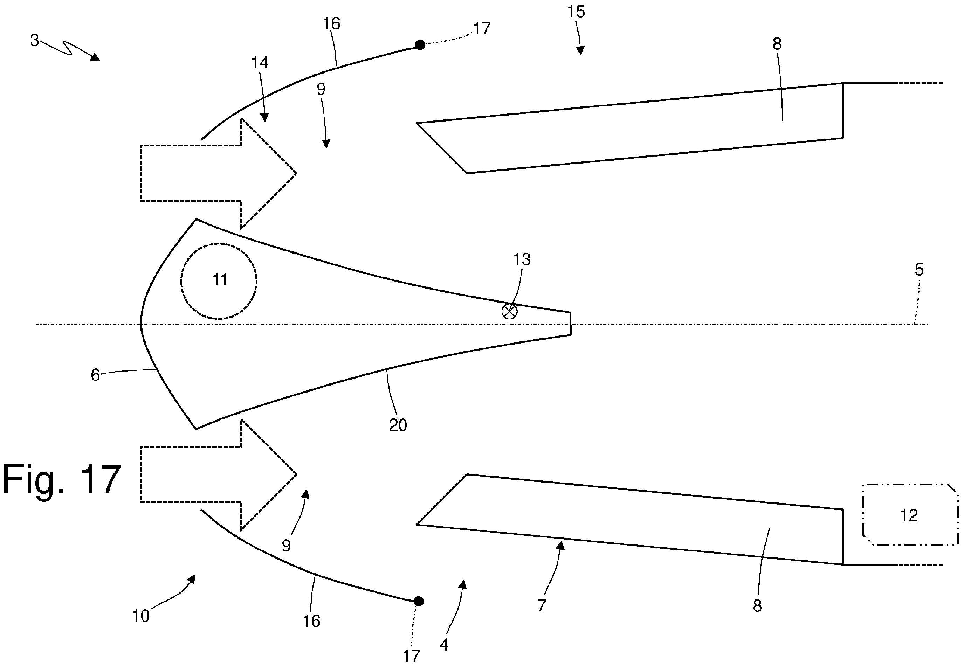

The movement of the bulkheads 16 from the closed position (shown in figure 14) to the open position (shown in figures 15, 16 and 17) and vice versa (namely, the opening and the closing of the bulkheads 16) can take place through a rotation-translation movement (shown in figure 15), through a mere rotation movement (shown in figure 16) or through a mere translation movement (shown in figure 17). Generally speaking, the rotation-translation movement (shown in figure 15) is preferable, as it permits the use of double-curvature bulkheads 16, which hardly work correctly with simple hinges (or, worse, with simple translations); to this regard, it should be pointed out that the double curvature is important to optimize the overall aerodynamic behaviour of the tubular housing 4.

In case of rotation-translation movement (shown in figure 15) or of mere rotation movement (shown in figure 16), each bulkhead 16 rotates between the open position and the closed position around the rotation axis 17, which is transverse to the longitudinal symmetry axis 5 of the tubular housing 4 and is arranged in the area of a rear end of the bulkhead 16. Obviously, each rotation axis 17 can be fixed (mere rotation movement, shown in figure 16) or movable (rotation-translation movement, shown in figure 15).

Computational fluid dynamics analyses revealed that, especially in case of high flying speed, the air flow can find it difficult to get into the inlet openings 9 in the presence of bulkheads 16 opening towards the inside of the tubular housing 4, as the air flow is negatively affected by the turbulences created inside the tubular housing 4 by the bulkheads 16 standing in the open position (namely, by the bulkhead 16 that are retracted inside the tubular housing 4). Furthermore, thanks to the movement towards the outside of the tubular housing 4, the bulkheads 16 become flow deflectors that channel the air towards the inlet openings 9.

Thanks to the presence of the bulkheads 16 opening towards the outside of the tubular housing 4 and of the deflector body 20, it is possible to obtain high performances both under filtering conditions (namely, with the bulkheads 16 in the closed position and the air taken in flowing through the inlet opening 7 engaged by the air filter 8) thanks to the outer aerodynamic optimization of the tubular housing 4 and (in an even more advantageous manner) under free intake conditions (namely, with the bulkheads 16 in the open position and the air taken in flowing through the inlet openings 9 as much as possible), thus reducing consumptions and improving the performances of the engine 2.

The embodiment shown by mere way of example in the accompanying drawings relates to a turbine engine 2, but the invention can find advantageous application in any other type of aircraft engine.

It should be pointed out that the air intake unit 3 described above can be coupled to the main engine of the helicopter 1 or to an auxiliary engine of an auxiliary power unit (APU); in other words, the air intake unit 3 described above can be used in any situation in which fresh air needs to be sucked in from the outside for the operation of the engine of the helicopter 1.

The embodiment shown by mere way of example in the accompanying drawings relates to a helicopter 1, but the invention can find advantageous application in any type of aircraft, hence also an airplane.

The air intake unit 3 described above has numerous advantages.

First of all, air intake unit 3 described above allows the aircraft 1 to safely operate in areas with a lot of dust (hence, in areas where the air close to the ground is rich in impurities raised both by natural wind and by air currents generated by the movement of the aircraft 1) thanks to the presence of the air filter 8, which, when needed, is operated (by moving the shutter device 10 to the closed position) so as to preventively filter the air taken in by the turbine engine 2.

Furthermore, the air intake unit 3 described above can operate, almost for the entire flight, without having its performances jeopardized, because, when the aircraft 1 flies high (i.e. relatively far from the ground), the air filter 8 is bypassed (by moving the shutter device 10 to the open position).

It should be pointed out that, thanks to the shape of a truncated cone of the air filter 8, the air taken in through the air filter 8 (i.e. through the inlet opening 7) can benefit from a dynamic effect (also called *"RAM"* effect), which allows static intake pressure to be increased exploiting the dynamic pressure generated by the forward movement of the helicopter 1. In the same way, thanks to the front position of the inlet opening 9, the air taken in through the inlet opening 9 (obviously, when the shutter device 10 is in the open position) can also benefit from a dynamic effect (also called *"RAM"* effect), which allows static intake pressure to be increased exploiting the dynamic pressure generated by the forward movement of the helicopter 1. In this way, the intake efficiency of the air intake unit 3 is always high, both when the shutter device 10 is in the open position and when the shutter device 10 is in the closed position.

Furthermore, when the shutter device 10 is in the closed position, the ogive-shaped front portion 14 causes both a minimization of the aerodynamic resistance of the air intake unit 3 and a reduction in the generation of vortices in the area of the air filter 8 (a vortex air flow significantly decreases the dynamic effect - *"RAM"* effect - which increases static intake pressure exploiting the dynamic pressure generated by the forward movement of the helicopter 1).

To sum up, the air intake unit 3 described above leads to an optimization of the dynamic effect (*"RAM"* effect) both for the air flowing through the inlet opening 7 (i.e. through the air filter 8) and for the air flowing through the inlet opening 9 (i.e. bypassing the air filter 8), thus minimizing aerodynamic resistance at the same time in both conditions.

Finally, the air intake unit 3 described above is easy and cheap to be manufactured, as the movements of the shutter device 10 can be obtained in a simple manner and with components that are available in the market.

### LIST OF THE REFERENCE NUMBERS OF THE FIGURES

- 1: helicopter
- 2: engine
- 3: air intake unit
- 4: tubular housing
- 5: longitudinal axis
- 6: outer wall
- 7: inlet opening
- 8: air filter
- 9: inlet opening
- 10: shutter device
- 11: actuator
- 12: electronic control unit
- 13: pressure sensor
- 14: front portion
- 15: rear portion
- 16: bulkhead
- 17: rotation axis
- 18: through hole
- 19: outer body
- 20: deflector body

## Claims

1. An air intake unit (3) for an engine of an aircraft (1); the intake unit (3) comprises:
a tubular housing (4), which has a longitudinal axis (5) of symmetry, is provided with an outer wall (6), and has an ogive-shaped front portion (14) and a rear portion (15);
at least one first inlet opening (7) which is obtained in the rear portion (15) through the outer wall (6) of the tubular housing (4) and through which the external air needed to operate the engine (2) can be taken in;
at least one air filter (8), which is supported by the tubular housing (4) and engages the first inlet opening (7), so as to filter the external air flowing through the first inlet opening (7);
at least one second inlet opening (9), which is obtained in the ogive-shaped front portion (14) through a limited portion of the outer wall (6) of the tubular housing (4), consist of a through hole made in the outer wall (6) of the tubular housing (4), is separate from and independent of the first inlet opening (7) and the air filter (8), and through which the external air needed to operate the engine (2) can be taken in;
a shutter device (10), which is coupled to the second inlet opening (9) and comprises a bulkhead (16), which is mounted so as to move between a closed position, in which the bulkhead (16) closes the second inlet opening (9), joining - without gaps - the outer wall (6) of the ogive-shaped front portion (14) in the area of the second inlet opening (9), and an open position, in which the bulkhead (16) sets the passage through the second inlet opening (9) free, moving away from the outer wall (6) of the ogive-shaped front portion (14);
an actuator (11), which moves the bulkhead (16) of the shutter device (10) between the closed position and the open position by means of a movement having a radial component relative to the longitudinal axis (5) of symmetry of the tubular housing (4);
the air intake unit (3) is **characterized in that** the bulkhead (16) of the shutter device (10) opens towards the outside of the tubular housing (4), so that, in the open position, the bulkhead (16) is completely arranged on the outside of the tubular housing (4), and **in that**, in the open position, the bulkhead (16) is arranged to act as a deflector which directs the air towards the second inlet opening (9).

2. An air intake unit (3) according to claim 1, wherein the actuator (11) moves the bulkhead (16) between the open position and the closed position by means of a rotational movement.

3. An air intake unit (3) according to claim 2, wherein the bulkhead (16) rotates between the open position and the closed position about a rotation axis (17) transverse to a longitudinal axis (5) of symmetry of the tubular housing (4).

4. An air intake unit (3) according to claim 3, wherein the rotation axis is arranged at a rear end of the bulkhead (16).

5. An air intake unit (3) according to any one of claims 1 to 4 and comprising a conical shaped deflector body (20), which is arranged inside the tubular housing (4) and deflects the air entering from the second inlet opening (9) towards an intake of the engine (2).

6. An air intake unit (3) according to claim 5, wherein the deflector body (20) has an inverse elliptical shape.

7. An air intake unit (3) according to claim 5 or 6, wherein the deflector body (20) contains the actuator (11).

8. An air intake unit (3) according to claim 5, 6 or 7, wherein the deflector body (20) contains at least one sensor (13) for monitoring the conditions of the air filter (8).

9. An air intake unit (3) according to one of the claims from 1 to 8, wherein:
the rear portion (15) crossed by the first inlet opening (7) has a truncated-conical shape;
the air filter (8) which engages the first inlet opening (7) has a truncated-conical shape.

10. An air intake unit (3) according to one of the claims from 1 to 9, wherein the filtering material of the air filter (8) is arranged in the area of a side wall and has, at the front and at the back, respective free openings.

11. An air intake unit (3) according to one of the claims from 1 to 10, wherein, when the bulkhead (16) is in the open position, at least part of the air flowing into the second inlet opening (9) enters in an axial direction relative to the tubular housing (4).

12. An air intake unit (3) according to one of the claims from 1 to 11, wherein, when the bulkhead (16) is in the open position, part of the air flowing into the second inlet opening (9) enters in an axial direction relative to the tubular housing (4) without being deflected by the bulkhead (16), whereas a remaining part of the air flowing into the second inlet opening (9) enters in a more or less radial direction relative to the tubular housing (4) since it is deflected towards the second inlet opening (9) by the bulkhead (16).

13. An air intake unit (3) according to one of the claims from 1 to 12, wherein, when the bulkhead (16) is in the open position, a main part of the air flowing into the second inlet opening (9) enters in an axial direction relative to the tubular housing (4) without being deflected by the bulkhead (16), whereas a remaining part of the air flowing into the second inlet opening (9) enters in a more or less radial direction relative to the tubular housing (4) since it is deflected towards the second inlet opening (9) by the bulkhead (16).

## Patentansprüche

1. Lufteinlasseinheit (3) für einen Motor eines Luftfahrzeugs (1); wobei die Lufteinlasseinheit (3) Folgendes umfasst:
ein rohrförmiges Gehäuse (4), das eine Symmetrie-Längsachse (5) aufweist, mit einer Außenwand (6) versehen ist und einen spitzbogenförmigen vorderen Abschnitt (14) und einen hinteren Abschnitt (15) aufweist;
mindestens eine erste Eintrittsöffnung (7), die in dem hinteren Abschnitt (15) durch die Außenwand (6) des rohrförmigen Gehäuses (4) hindurch erhalten wird, und durch die hindurch die Außenluft, die erforderlich ist, um den Motor (2) zu betreiben, eingelassen werden kann;
mindestens einen Luftfilter (8), der von dem rohrförmigen Gehäuse (4) getragen wird und die erste Eintrittsöffnung (7) in Eingriff nimmt, um die Außenluft, die durch die erste Eintrittsöffnung (7) strömt, zu filtern;
mindestens eine zweite Eintrittsöffnung (9), die in dem spitzbogenförmigen vorderen Abschnitt (14) durch einen begrenzten Abschnitt der Außenwand (6) des rohrförmigen Gehäuses (4) hindurch erhalten wird, aus einem Durchgangsloch besteht, das in der Außenwand (6) des rohrförmigen Gehäuses (4) hergestellt ist, getrennt von und unabhängig von der ersten Eintrittsöffnung (7) und dem Luftfilter (8) ist, und durch die hindurch die Außenluft, die erforderlich ist, um den Motor (2) zu betreiben, eingelassen werden kann;
eine Verschlussvorrichtung (10), die mit der zweiten Eintrittsöffnung (9) verbunden ist und ein Schott (16) umfasst, das so montiert ist, dass es sich bewegt zwischen einer geschlossenen Stellung, in der das Schott (16) die zweite Eintrittsöffnung (9) schließt, wobei es sich - lückenlos - im Bereich der zweiten Eintrittsöffnung (9) an die Außenwand (6) des spitzbogenförmigen vorderen Abschnitts (14) anfügt, und einer geöffneten Stellung, in der das Schott (16) den Durchgang durch die zweite Eintrittsöffnung (9) hindurch freigibt, wobei es sich von der Außenwand (6) des spitzbogenförmigen vorderen Abschnitts (14) weg bewegt;
einen Aktuator (11), der das Schott (16) der Verschlussvorrichtung (10) mittels einer Bewegung, die eine radiale Komponente in Bezug auf die Symmetrie-Längsachse (5) des rohrförmigen Gehäuses (4) aufweist, zwischen der geschlossenen Stellung und der geöffneten Stellung bewegt;
wobei die Lufteinlasseinheit (3) **dadurch gekennzeichnet ist, dass** sich das Schott (16) der Verschlussvorrichtung (10) hin zu der Außenseite des rohrförmigen Gehäuses (4) öffnet, sodass das Schott (16), in der geöffneten Stellung, vollständig auf der Außenseite des rohrförmigen Gehäuses (4) angeordnet ist, und dadurch, dass das Schott (16), in der geöffneten Stellung, so angeordnet ist, dass es als ein Ablenker fungiert, der die Luft hin zu der zweiten Eintrittsöffnung (9) leitet.

2. Lufteinlasseinheit (3) nach Anspruch 1, wobei der Aktuator (11) das Schott (16) mittels einer Drehbewegung zwischen der geöffneten Stellung und der geschlossenen Stellung bewegt.

3. Lufteinlasseinheit (3) nach Anspruch 2, wobei sich das Schott (16) zwischen der geöffneten Stellung und der geschlossenen Stellung um eine Drehachse (17) dreht, die quer zu einer Symmetrie-Längsachse (5) des rohrförmigen Gehäuses (4) ist.

4. Lufteinlasseinheit (3) nach Anspruch 3, wobei die Drehachse an einem hinteren Ende des Schotts (16) angeordnet ist.

5. Lufteinlasseinheit (3) nach einem beliebigen der Ansprüche 1 bis 4 und einen kegelförmig ausgebildeten Ablenkkörper (20) umfassend, der im Inneren des rohrförmigen Gehäuses (4) angeordnet ist und die Luft, die aus der zweiten Eintrittsöffnung (9) eintritt, hin zu einem Einlass des Motors (2) ablenkt.

6. Lufteinlasseinheit (3) nach Anspruch 5, wobei der Ablenkkörper (20) eine umgekehrte elliptische Form aufweist.

7. Lufteinlasseinheit (3) nach Anspruch 5 oder 6, wobei der Ablenkkörper (20) den Aktuator (11) umfasst.

8. Lufteinlasseinheit (3) nach Anspruch 5, 6 oder 7, wobei der Ablenkkörper (20) mindestens einen Sensor (13) zur Überwachung der Zustände des Luftfilters (8) umfasst.

9. Lufteinlasseinheit (3) nach einem beliebigen der Ansprüche 1 bis 8, wobei:
der hintere Abschnitt (15), der von der ersten Eintrittsöffnung (7) durchquert wird, eine Kegelstumpfform aufweist;
der Luftfilter (8), der die erste Eintrittsöffnung (7) in Eingriff nimmt, eine Kegelstumpfform aufweist.

10. Lufteinlasseinheit (3) nach einem beliebigen der Ansprüche 1 bis 9, wobei das Filtermaterial des Luftfilters (8) in dem Bereich einer Seitenwand angeordnet ist und, an der Vorderseite und an der Rückseite, jeweilige freie Öffnungen aufweist.

11. Lufteinlasseinheit (3) nach einem beliebigen der Ansprüche 1 bis 10, wobei, wenn das Schott (16) in der geöffneten Stellung ist, zumindest ein Teil der Luft, die in die zweite Eintrittsöffnung (9) strömt, in einer axialen Richtung in Bezug auf das rohrförmige Gehäuse (4) eintritt.

12. Lufteinlasseinheit (3) nach einem beliebigen der Ansprüche 1 bis 11, wobei, wenn das Schott (16) in der geöffneten Stellung ist, ein Teil der Luft, die in die zweite Eintrittsöffnung (9) strömt, in einer axialen Richtung in Bezug auf das rohrförmige Gehäuse (4) eintritt, ohne von dem Schott (16) abgelenkt zu werden, wohingegen ein verbleibender Teil der Luft, die in die zweite Eintrittsöffnung (9) strömt, in einer mehr oder weniger radialen Richtung in Bezug auf das rohrförmige Gehäuse (4) eintritt, da er von dem Schott (16) hin zu der zweiten Eintrittsöffnung (9) abgelenkt wird.

13. Lufteinlasseinheit (3) nach einem beliebigen der Ansprüche 1 bis 12, wobei, wenn das Schott (16) in der geöffneten Stellung ist, ein Hauptteil der Luft, die in die zweite Eintrittsöffnung (9) strömt, in einer axialen Richtung in Bezug auf das rohrförmige Gehäuse (4) eintritt, ohne von dem Schott (16) abgelenkt zu werden, wohingegen ein verbleibender Teil der Luft, die in die zweite Eintrittsöffnung (9) strömt, in einer mehr oder weniger radialen Richtung in Bezug auf das rohrförmige Gehäuse (4) eintritt, da er von dem Schott (16) hin zu der zweiten Eintrittsöffnung (9) abgelenkt wird.

## Revendications

1. Unité d'admission d'air (3) pour un moteur d'un aéronef (1); l'unité d'admission (3) comprend :
un boîtier tubulaire (4), qui présente un axe (5) de symétrie longitudinal, est pourvu d'une paroi extérieure (6), et comporte une portion avant en forme d'ogive (14) et une portion arrière (15) ;
au moins une première ouverture d'entrée (7) qui est obtenue dans la portion arrière (15) à travers la paroi extérieure (6) du boîtier tubulaire (4) et à travers laquelle peut être accueilli l'air externe nécessaire pour faire fonctionner le moteur (2) ;
au moins un filtre à air (8), qui est supporté par le boîtier tubulaire (4) et vient en prise avec la première ouverture d'entrée (7), de manière à filtrer l'air externe s'écoulant à travers la première ouverture d'entre (7) ;
au moins une deuxième ouverture d'entrée (9), qui est obtenue dans la portion avant en forme d'ogive (14) à travers une portion limitée de la paroi extérieure (6) du boîtier tubulaire (4), est constituée d'un trou traversant créé dans la paroi extérieure (6) du boîtier tubulaire (4), est séparée de la première ouverture d'entrée (7) et du filtre à air (8) et indépendante de ceux-ci, et à travers laquelle peut être accueilli l'air externe nécessaire pour faire fonctionner le moteur (2) ;
un dispositif obturateur (10), qui est accouplé à la deuxième ouverture d'entrée (9) et comprend une cloison (16), qui est montée de manière à se déplacer entre une position fermée, dans laquelle la cloison (16) ferme la deuxième ouverture d'entrée (9), joignant - sans espaces - la paroi extérieure (6) de la portion avant en forme d'ogive (14) dans la zone de la deuxième ouverture d'entrée (9), et une position ouverte, dans laquelle la cloison (16) libère le passage à travers la deuxième ouverture d'entrée (9), s'éloignant de la paroi extérieure (6) de la portion avant en forme d'ogive (14) ;
un actionneur (11), qui déplace la cloison (16) du dispositif obturateur (10) entre la position fermée et la position ouverte à l'aide d'un déplacement ayant une composante radiale par rapport à l'axe (5) de symétrie longitudinal du boîtier tubulaire (4) ;
l'unité d'admission d'air (3) est **caractérisée en ce que** la cloison (16) du dispositif obturateur (10) s'ouvre vers l'extérieur du boîtier tubulaire (4), de telle sorte que, dans la position ouverte, la cloison (16) est complètement agencée sur l'extérieur du boîtier tubulaire (4), et **en ce que**, dans la position ouverte, la cloison (16) est agencée pour servir de déflecteur qui dirige l'air vers la deuxième ouverture d'entrée (9).

2. Unité d'admission d'air (3) selon la revendication 1, dans laquelle l'actionneur (11) déplace la cloison (16) entre la position ouverte et la position fermée à l'aide d'un déplacement rotatif.

3. Unité d'admission d'air (3) selon la revendication 2, dans laquelle la cloison (16) tourne entre la position ouverte et la position fermée autour d'un axe de rotation (17) transversal à un axe (5) de symétrie longitudinal du boîtier tubulaire (4).

4. Unité d'admission d'air (3) selon la revendication 3, dans laquelle l'axe de rotation est agencé au niveau d'une extrémité arrière de la cloison (16).

5. Unité d'admission d'air (3) selon l'une quelconque des revendications 1 à 4 et comprenant un corps de déflecteur de forme conique (20), qui est agencé à l'intérieur du boîtier tubulaire (4) et fait dévier l'air entrant depuis la deuxième ouverture d'entrée (9) vers une admission du moteur (2).

6. Unité d'admission d'air (3) selon la revendication 5, dans laquelle le corps de déflecteur (20) présente une forme elliptique inverse.

7. Unité d'admission d'air (3) selon la revendication 5 ou 6, dans laquelle le corps de déflecteur (20) contient l'actionneur (11).

8. Unité d'admission d'air (3) selon la revendication 5, 6 ou 7, dans laquelle le corps de déflecteur (20) contient au moins un capteur (13) pour surveiller les conditions du filtre à air (8).

9. Unité d'admission d'air (3) selon l'une des revendications 1 à 8, dans laquelle :
la portion arrière (15) coupée par la première ouverture d'entrée (7) présente une forme conique tronquée ;
le filtre à air (8) qui vient en prise avec la première ouverture d'entrée (7) présente une forme conique tronquée.

10. Unité d'admission d'air (3) selon l'une des revendications 1 à 9, dans laquelle le matériau filtrant du filtre à air (8) est agencé dans la zone d'une paroi latérale et comporte, au niveau de l'avant et au niveau de l'arrière, des ouvertures libres respectives.

11. Unité d'admission d'air (3) selon l'une des revendications 1 à 10, dans laquelle, lorsque la cloison (16) est dans la position ouverte, au moins une partie de l'air s'écoulant dans la deuxième ouverture d'entrée (9) entre dans une direction axiale par rapport au boîtier tubulaire (4).

12. Unité d'admission d'air (3) selon l'une des revendications 1 à 11, dans laquelle, lorsque la cloison (16) est dans la position ouverte, une partie de l'air s'écoulant dans la deuxième ouverture d'entrée (9) entre dans une direction axiale par rapport au boîtier tubulaire (4) sans être déviée par la cloison (16), alors qu'une partie restante de l'air s'écoulant dans la deuxième ouverture d'entrée (9) entre dans une direction plus ou moins radiale par rapport au boîtier tubulaire (4) étant donné qu'elle est déviée vers la deuxième ouverture d'entrée (9) par la cloison (16).

13. Unité d'admission d'air (3) selon l'une des revendications 1 à 12, dans laquelle, lorsque la cloison (16) est dans la position ouverte, une partie principale de l'air s'écoulant dans la deuxième ouverture d'entrée (9) entre dans une direction axiale par rapport au boîtier tubulaire (4) sans être déviée par la cloison (16), alors qu'une partie restante de l'air s'écoulant dans la deuxième ouverture d'entrée (9) entre dans une direction plus ou moins radiale par rapport au boîtier tubulaire (4) étant donné qu'elle est déviée vers la deuxième ouverture d'entrée (9) par la cloison (16).
